Europäisches Patentamt

European Patent Office

Office européen des brevets

(19)

(11) Publication number: **0 192 812 B1**

# EUROPEAN PATENT SPECIFICATION

(12)

(45) Date of publication of patent specification: **27.02.91**  (51) Int. Cl.⁵: **G01D 5/16**

(21) Application number: **85109456.5**

(22) Date of filing: **30.07.85**

(54) Position sensing system.

(30) Priority: **28.01.85 US 695975**

(43) Date of publication of application:
**03.09.86 Bulletin 86/36**

(45) Publication of the grant of the patent:
**27.02.91 Bulletin 91/09**

(84) Designated Contracting States:
**DE FR GB IT**

(56) References cited:
**DE-A- 2 739 877**
**GB-A- 1 395 850**
**US-A- 4 024 458**

**ELEKTRO AUTOMATION, vol. 47, 27th October 1965, pages 21-24; "Magnetischer Massstab als analoger Messwertgeber"**

(73) Proprietor: **International Business Machines Corporation**
**Old Orchard Road**
**Armonk, N.Y. 10504(US)**

(72) Inventor: **Pawletko, Joseph Paul**
**3718 Maplehurst Drive**
**Endwell, NY 13760(US)**

(74) Representative: **Buff, Henri C.**
**Compagnie IBM France Département de Propriété Intellectuelle**
**F-06610 La Gaude(FR)**

EP 0 192 812 B1

Rank Xerox (UK) Business Services

## Description

The present invention relates to a system for detecting relative position in accordance with the preamble of claim 1 (GB-A-1395 850).

In the field of precision mechanical movements and machine positioning, it is becoming more important to determine relative position accurately and quickly. The relative position of two or more members or parts with respect to one another is especially critical in the fields of material handling, medicine and manufacturing. In the latter case, robotics is playing an ever increasing role.

Manufacturers of highly sophisticated miniature equipment, for example, such as electronic components, printed circuit boards and the like, often require precise relative positioning to within some micrometers or less. Few systems are now capable of such high resolution, reliable measurements.

Magneto resistive elements, whose electrical resistive characteristics or properties vary as a function of the magnetic flux density to which they are subjected, are well known. U.S. Patent No. 3,172,032, issued to Hunt, teaches a rudimentary magneto resistive element in which a servo mechanism is provided to operate in conjunction with a magnetic field generator to control the intensity of the magnetic field. The servo mechanism controls excitation current and ultimately the resistance of conductive paths.

U.S. Patent No. 3,554,169, issued to Wahl et al., describes a fuel injection arrangement for internal combustion engines in which a magnetically sensitive resistor is subjected to a magnetic field that varies in intensity. By varying the resistance value of the magnetically sensitive resistor through variation of the magnetic field, an electronic timing network is varied as a function of a selected operating characteristic. The magnetically sensitive resistor provides a function in the aforementioned patent which is commonly referred to as coupling.

U.S. Patent No. 3,846,697, issued to Cila et al., discloses a digital pickup for counting gear teeth. A pair of magneto resistors mounted on a permanent magnet sense the gear teeth. The magneto resistors are connected in a bridge circuit, the output of which triggers an IC switch to produce a digital output signal. The magneto resistors are directly mounted to one pole of a permanent magnet. This arrangement results in a relatively strong but coarse magnetic field, unsuitable for use with other magneto resistors due to the tendency for magnetic fields to interfere with one another. Moreover, the magneto resistors are not differential with respect to one another, resulting in coarse overall sensitivity.

U.S. Patent No. 4,119,911, issued to Johnson, Jr., discloses a displacement transducer in which two toothed members have magnetic poles arranged in alternating sequence. The toothed members are arranged so that a magnetic pole on one of the members is spaced from a magnetic pole of opposite plurality on the other member. A magneto resistive element is held within the air gap between the magnetic poles to intercept magnetic flux lines. The magneto resistive element is in the form of a thin film material which is moved between the permanent magnets. The magneto resistive element has an electrical resistance which is dependent on the angular orientation and magnitude of the flux lines with respect to the element. A bridge circuit is connected to both ends of the magneto resistive element. By measuring the electrical resistance of the magneto resistive element, the angular orientation of the flux lines and the relative displacement of the toothed members can be obtained. The function of the apparatus hereinabove described is similar to that of a strain gage. The limit of resolution in this system is based on mechanical or physical limitations. That is, the dimension of the tooth or the length of the gap between magnetic poles is limited to approximately 200 $\mu$m at the present level of technology.

U.S. Patent No. 3,949,345, issued to Makino et al., discloses a magnetoresistance element having two stripe groups aligned in different directions, requiring precise spacing between the stripe groups and relatively complex circuitry to process electrical information obtained therefrom.

It is therefore the object of the present invention to provide a position sensing system of the aforementioned kind that allows to measure relative positions with high precision, needs relatively simple signal processing circuitry and is adaptable to various paths of relative motion.

This object is achieved by the invention of claim 1; embodiments are characterized in the dependent claims.

The present invention uses a magnetic field generator, e.g. a permanent magnet, whose lines of magnetic flux are concentrated onto one or several magneto resistive elements; each half of the latter is magnetically coupled to a reference scale with periodic protuberances. The magnetic flux is changed in the magneto resistive element according to its relative position to the reference scale, generating a difference signal that is electronically evaluated.

The invention is particularly useful to measure relative positions in robotic equipments along linear or curved tracks; the focussing of the magnetic flux results in strong analog signals, that can be easily evaluated with great precision using simple analog and/or digital circuits.

An embodiment of the invention is now described in detail with reference to the drawings, where:

FIGURE 1    is a cross sectional view of the sensor in accordance with the present invention and the transducer grid with which it cooperates;

FIGURE 2a    is a graph of transducer signal output as a function of relative position;

FIGURE 2b    is a square wave representation of the transducer signal output represented in FIGURE 2a and of a comparator output signal generated by logic gates in accordance with the present invention;

FIGURE 3    is a schematic representation of a 3-input AND-OR gate;

FIGURE 4    is a schematic representation of a comparator with magneto resistive elements and a reference voltage source; and

FIGURE 5    is a block diagram representation of a high resolution positioning system and servo mechanism in accordance with the present invention.

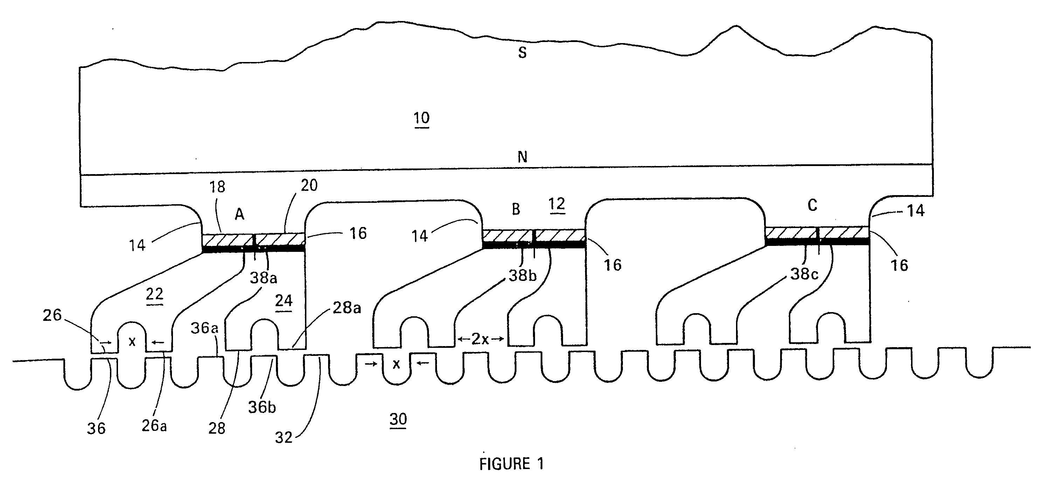

Referring now to FIGURE 1 there is shown a permanent magnet 10, shown with its north polarity oriented downwardly. This permanent magnet 10 can be fabricated of material that is dependent upon the size of the overall transducer. For relatively small dimensions, a permanent magnet made of rare earth material such as samarium cobalt or neodymium cobalt can be used. Larger transducer dimensions would allow the use of alnico magnets.

Connected to the permanent magnet 10 is a flux concentrator 12 made of magnetically soft material. The flux concentrator 12 can be attached to the permanent magnet 10 or be in very close proximity thereto by use of common bonding or mechanical attachment techniques. It is important not to allow the flux concentrator 12 to develop a high remanent magnetic field. The flux concentrator 12 is magnetically soft to allow the lines of flux in the permanent magnet to be concentrated through a vortex location in the concentrator shape, shown as reference numeral 14. Lines of flux from a relatively large area in the permanent magnet 10 are thereby concentrated by the flux concentrator 12 at three vortex locations 14 in the preferred embodiment, labelled A, B and C in FIGURE 1. The flux concentrator 12 can have any number of vortex locations 14. It should be understood that the larger the number of vortex locations in a flux concentrator, the greater will be the resolution of the sensor.

At the end of each vortex location 14 is a bar of magneto resistive material 16, such as indium antimonide. This material has a specific electro mobility and therefore a specific resistance. Such material is described, for example, in U.S. Patent No. 3,934,160, issued to Von Borcke and in an article entitled "Magnetoresistor Differential Sensor FP 210" by the same author in the Siemens Electronic Components Bulletin VIII (1973) No. 2, pp. 53-56. The properties of the magneto resistive element 16 allow an increase in magnetic field to result in an increase in resistivity in accordance with a parabolic function. In the preferred embodiment, the magnetic flux density in the region near the magneto resistive element 16 is approximately 0.24 Tesla.

At a certain portion of the resistivity vs. magnetic field curve, the relationship between magnetic field and resistivity approaches linearity. There is no need to work only within that linear region, however, because the parabolic equation is well understood and can be used downstream in further signal processing to obtain a correction for this nonlinearity with a high degree of accuracy.

The magneto resistive element 16 has two halves 18 and 20. Connected to the first half 18 of the magneto resistive element 16 is a flux coupler 22. The flux coupler 22 is irregularly shaped in a manner best suited to interface with a transducer grid, hereinafter described. The flux coupler 22 is made of magnetically soft material. Similarly, connected to the other half 20 of the magneto resistive element 16 is a second flux coupler 24. The flux couplers 22 and 24 are terminated in two flat feet 26, 26a and 28, 28a, respectively, each foot being offset from the other by the distance "x," as herein below described. The flux couplers 22 and 24 are offset from one another by the distance "2x." The vortex location 14, two halves 18 and 20 of the magneto resistive element 16 and two flux couplers 22 and 24 are compositely referred to as a transducer element or sensor unit.

Oppositely disposed to the three transducer elements is a transducer grid 30 which preferably consists of a magnetically soft material. The transducer grid 30 in the preferred embodiment has a plurality of uniformly dimensioned and uniformly spaced protuberances or teeth 32 which are flattened at their uppermost extremities and oriented to interact with the flux coupler feet 26, 26a, 28, 28a. The distance between transducer grid teeth 32, called grid spacing, is "x."

The transducer grid teeth 32 may be linearly oriented, circularly oriented or may be disposed in any other geometric pattern as is most suitable for measuring the relative position of two specified machine elements or members with respect to one another. It should be noted that, with respect to the transducer grid teeth 32, the flux couplers 22 and 24 are out of electrical phase and offset from one another by 180 electrical degrees. That is, flux coupler foot 26 is directly opposite transducer grid tooth 36 whereas flux coupler foot 28 is disposed precisely between two transducer grid teeth 36a and 36b. The reason for this phase relationship is to allow both halves 18 and 20 of the magnetic resistive element 16 to modulate flux distribution. One half 18 of the magneto resistive element 16 distributes the magnetic lines of flux exactly opposite to the magnetic lines of flux distributed by the other half 20 of the magneto resistive element 16.

The magneto resistive element 16, divided into halves 18 and 20, has an electrical connection point 38a at which an electrical wire, not shown, can be attached. This connection point 38a is referred to as an electrical center tap. An electrical signal generated at connection point 38a can then be used for further signal processing as hereinafter described.

In the preferred embodiment of the present invention, three sensor units are disposed opposite the transducer grid 30 for higher sensitivity and better resolution of position sensing information. Corresponding to electrical center tap 38a on the first sensor unit are electrical center taps 38b and 38c on the second and third sensor units, respectively, to which electrical wires can also be attached.

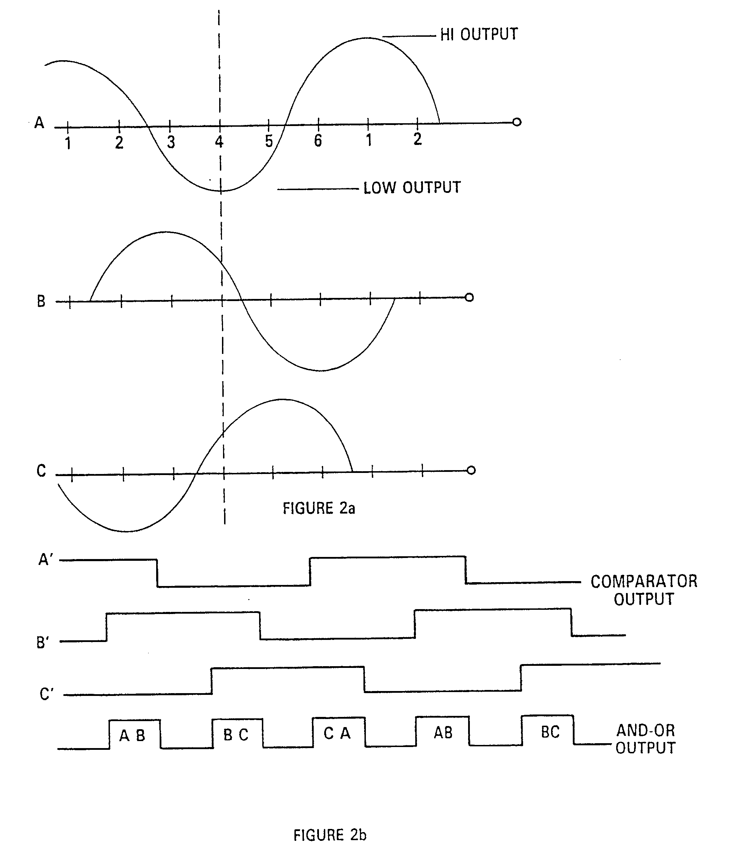

The operation of the positioning sensors can best be described by referring also to FIGURE 2a. There are shown graphs which represent the electrical signal output from the three center taps 38a, 38b and 38c (FIGURE 1), respectively. The X axes of these graphs represent displacement or distance and the Y axis represents output voltage. The uppermost portion of the graph represents the output of sensor unit 38a. The center portion of the graph represents the output of sensor unit 38b. The lower portion of FIGURE 2a represents the output of sensor unit 38c.

As the first sensor unit (FIGURE 1) is caused to move relative to the transducer grid 30, the magnetic lines of flux generated by the permanent magnet 10 are received by the flux concentrator 12 and are directed and concentrated to the vortex location 14. The flux density of the two halves 18 and 20 of the magneto resistive element 16 is determined by the permeance along paths in flux couplers 22 and 24 respectively. The permeance of the two paths in flux couplers 22 and 24 is determined by the relative position of feet 26, 26a and 28, 28a to the transducer grid teeth 32.

In the position shown in FIGURE 1, the magnetic field between the sensor unit and transducer grid 30 is strongest between flux coupler foot 26 and transducer grid tooth 36 as well as between foot 28 and the tooth oppositely disposed. It should be noted that magnetic permeance is a function of both the air gap or distance between foot 26 and tooth 36 and the surface area of the parallel surfaces (i.e., the projection of the surface of the foot 26 on the tooth 36). At this instant, the magnetic field between the pair of flux coupler feet 28, 28a and transducer grid tooth 36b is weakest. The electrical signal generated by the magneto resistive element 16 at the electrical center tap 38a is therefore relatively strongest at this time, due to the resistance differential of magneto resistive element halves 18 and 20 which is generated by both flux couplers 22 and 24.

The electrical signal generated by the second magneto resistive element 16 at its electrical center tap 38b is shown in the center graph, FIGURE 2a. It can be seen that the value of the electrical signal generated at electrical center tap 38b is generally different than that generated at electrical center tap 38a at any given instant. This is due to the fact that the first pair of flux couplers 22 and 24 is disposed out of phase relative to the second pair with respect to the transducer grid teeth 32.

Similarly, the electrical signal generated by the third magneto resistive element at its electrical center tap 38c is generally different than those generated at electrical center taps 38a and 38b at any given instant, as depicted by the lowermost portion of FIGURE 2a.

As the three sensor units move relative to the transducer grid 30, the electrical signals generated by the electrical center taps 38a, 38b and 38c vary, but maintain their offset relationship with respect to one another.

The three signals can be processed (e.g., compared, added), resulting in the digital square wave graph depicted in FIGURE 2b. It should be noted that the uppermost three square wave signals represent the comparator output of the signals from electrical center taps 38a, 38b and 38c, respectively, when compared to a reference voltage, not shown in FIGURE 1, but represented by the X axes in FIGURE 2a. By convention, the signal A, when compared to the reference voltage, becomes A'. Similarly, signal B compared to the reference voltage becomes B' and signal C becomes C'.

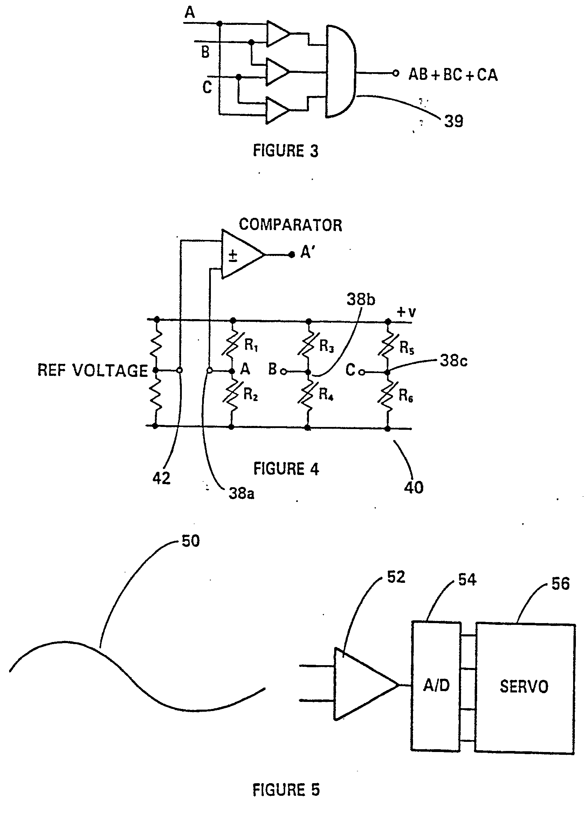

Referring to FIGURE 3, there is shown a three-input OR gate 39, the inputs of which are generated by three two-way AND circuits that logically combine the output signals shown in FIGURE 2a. The sum of these three signals results in an output signal representing AB + BC + CA. The lowermost square wave graph of FIGURE 2b represents the output of the circuit shown in FIGURE 3.

Referring now also to FIGURE 4, there is shown an electrical schematic representation of the comparator used to generate the square wave signals shown in FIGURE 2b. This comparator bridge circuit is identified generally as reference numeral 40. Variable resistors $R_1$ and $R_2$ represent the halves 18 and 20 of the magneto resistive element 16 (FIGURE 1). Likewise, variable resistor pairs $R_3$, $R_4$ and $R_5$, $R_6$ represent respective halves of the second and third magneto resistive elements in the preferred embodiment. Reference voltage 42 is common for all three sensor units. The reference voltage source 42 is a resistive divider in the preferred embodiment, but it should be understood that a Zener diode or battery can also be used to supply voltage.

When the reference voltage 42 and the electrical center tap output 38a are equal, the comparator value A' is zero. Similarly, if $R_1$ has a higher value than $R_2$ the comparator output A' will be moved in a negative direction. When the electrical center tap voltage 38a is less than the reference voltage 42, the comparator output A' is zero. In all other cases the comparative value is proportionally positive. A $+5$ v power supply results in a signal output A', B' or C' of approximately 0.8 v peak to peak.

Referring now to also FIGURE 5, there is shown a block diagram of a system that incorporates the high output high resolution transducer of the present invention. The electrical analog signal 50 is sinusoidal in the preferred embodiment. This is the signal that is output from the electrical center tap of one of the sensor units (FIGURE 1). The signal 50 is input to an amplifier 52 which, in turn, supplies an output signal to an analog to digital (A/D) converter 54. The A/D converter supplies a digital signal to a servo mechanism 56 used for positioning a movable member relative to a stationary member.

The system shown in FIGURE 5 results in high resolution with a minimum amount of circuitry and with no need for a sophisticated A/D apparatus. To adapt the system for use with a plurality of sensor units, as is shown in the preferred embodiment (FIGURE 1), requires a logic system capable of summing the signals A, B and C before further signal processing thereof. Such logic systems are well known in the art of digital or analog signal processing.

## Claims

1. System for detecting relative positions of machine elements and the like, using magneto resistive elements (14, 16) to sense the magnetic flux of a magnetic field generator (10), comprising:
   at least one means (12) operatively connected to the magnetic field generator (10) for concentrating lines of magnetic flux produced thereby;
   a magneto resistive element (16) operatively connected to each of the concentrating means;
   a reference position scale (30) comprising a transducer grid with a plurality of periodic protuberances (36);
   characterized in that:
   two flux couplers (22, 24) operatively connected to each of the magneto resistive elements and disposed out of phase with one another with respect to the transducer grid for modulating flux distribution between the concentrating means and the transducer grid.

2. The system in accordance with claim 1 wherein the reference position scale (30) is adapted to move relative to the flux couplers (22, 24).

3. The system in accordance with claim 1 or 2 wherein the two flux couplers associated with each concentrating means are disposed 180° out of phase with respect to one another.

4. The system of one of the claims 1 to 3 wherein the pairs of flux couplers associated with each concentration means are disposed such that each pair has a different phase relationship with respect to the reference position scale.

5. The system in accordance with one of the claims 1 to 4 wherein the transducer grid is linear.

6. The system in accordance with one of the claims 1 to 4 wherein the transducer grid forms at least a portion of a curve.

7. The system in accordance with one of the claims 1 to 6 wherein the reference position scale comprises magnetically soft material.

8. The system of one of the claims 1 to 7 wherein each magneto resistive element is divided into two halves each of which is connected to one of the flux couplers and wherein an electrical tap (38) is provided at the intersection of the two halves to extract an analog position signal.

9. The system of claim 8 wherein a bridge circuit (Fig. 4) is provided to compare the analog position signal of each electrical tap (38) to a reference voltage.

10. The system of one of the claims 1 to 9 wherein either the magnetic field generator or the reference position scale is operatively connected to a position servo mechanism.

**Revendications**

1. Système pour détecter des positions relatives d'organes de machine et analogues, utilisant des éléments magnéto-résistifs (16) pour détecter le flux magnétique d'un générateur de champ magnétique (10), comprenant
au moins des premiers moyens (12) raccordés de façon opérationnelle au générateur de champ magnétique (10) pour concentrer des lignes de flux magnétiques produites par ce générateur,
un élément magnétorésistif (16) raccordé de façon opérationnelle à chacun des moyens de concentration,
une échelle de positions de référence (30) comprenant une grille formant transducteur, munie d'une pluralité de protubérances périodiques (36),
caractérisé en ce que:
deux coupleurs de flux (22,24) sont raccordés de façon opérationnelle à chacun des éléments magnéto-résistifs (18,20) et sont déphasés entre eux et par rapport à la grille formant transducteur de manière à moduler la distribution du flux entre les moyens de concentration et la grille formant transducteur.

2. Système selon la revendication 1, dans lequel l'échelle de positions de référence (30) est adaptée de manière à se déplacer par rapport aux coupleurs de flux (22,24).

3. Système selon la revendication 1 ou 2, dans lequel les deux coupleurs de flux associés à chacun des moyens de concentration sont déphasés de 180° l'un par rapport à l'autre.

4. Système selon l'une des revendications 1 à 3, dans lequel les couples de coupleurs de flux associés à chacun des moyens de concentration sont disposés de telle sorte que chaque couple possède une relation de phase différente par rapport à l'échelle de positions de référence.

5. Système selon l'une quelconque des revendications 1 à 4, dans lequel la grille formant transducteur est linéaire.

6. Système selon l'une quelconque des revendications 1 à 4, dans lequel la grille formant transducteur forme au moins une partie d'une courbe.

7. Système selon l'une des revendications 1 à 6, dans lequel l'échelle de positions de référence est réalisée en un matériau magnétique doux.

8. Système selon l'une des revendications 1 à 7, dans laquelle chaque élément magnéto-résistif est subdivisé en deux moitiés dont chacune est raccordée à l'un des coupleurs de flux et dans lequel une prise électrique (38) est prévue au niveau de l'intersection des deux moitiés de manière à extraire un signal analogique de position.

9. Système selon la revendication 8, dans lequel un circuit en pont (figure 4) est prévu pour comparer le signal de position analogique de chaque prise électrique (38) à une tension de référence.

10. Système selon la revendication 1 à 9, dans lequel soit le générateur de champ magnétique, soit l'échelle de positions de référence est raccordé de façon opérationnelle à un mécanisme d'asservissement de position.

**Ansprüche**

1. System zur Feststellung der Relativlagen von Maschinenelementen und dgl., das magnetoresistive Elemente (16) verwendet, um den magnetischen Fluß eines Magnetfeldgenerators (10) zu erfassen und das enthält:
zumindest ein mit dem Magnetfeldgenerator (10) wirkend verbundenes Mittel (12), um die von diesem erzeugten Linien des magnetischen Flusses zu konzentrieren,
ein mit jedem der Konzentrierungsmittel wirkend verbundenes magnetoresistives Element (16),
eine Referenzpositionsskala (30), die ein Wandlergitter mit einer Mehrzahl von periodischen Vorsprüngen (36) besitzt,
dadurch gekennzeichnet, daß
zwei Flußkuppler (22, 24) mit jedem der magnetoresistiven Elemente (18, 20) wirkend verbunden und gegeneinander bezüglich des Wandlergitters außer Phase angeordnet sind, um die Flußverteilung zwischen dem Konzentrierungsmittel und dem Wandlergitter zu modulieren.

2. System nach Anspruch 1, bei welchem sich die Referenzpositionsskala (30) bezüglich der Flußkuppler (22, 24) bewegen kann.

3. System nach Anspruch 1 oder 2, bei welchem die beiden jedem Konzentrierungsmittel zugeordneten Flußkuppler gegeneinander um 180° außer Phase angeordnet sind.

4. System nach einem der Ansprüche 1 bis 3, bei welchem die jedem Konzentrierungsmittel zugeordneten Paare von Flußkupplern so angeordnet sind, daß jedes Paar eine verschiedene Phasenbeziehung bezüglich der Referenzpositionsskala aufweist.

5. System nach einem der Ansprüche 1 bis 4, bei welchem das Wandlergitter linear ist.

6. System nach einem der Ansprüche 1 bis 4, bei welchem das Wandlergitter zumindest einen Abschnitt einer Kurve bildet.

7. System nach einem der Ansprüche 1 bis 6, bei welchem die Referenzpositionsskala magnetisch weiches Material enthält.

8. System nach einem der Ansprüche 1 bis 7, bei welchem jedes magnetoresistive Element in zwei Hälften geteilt ist, deren jede mit einem der Flußkuppler verbunden ist, wobei an der Schnittstelle der beiden Hälften ein elektrischer Abgriff (38) vorgesehen ist, um ein analoges Positionssignal abzunehmen.

9. System nach Anspruch 8, bei welchem eine Brückenschaltung (Fig. 4) vorgesehen ist, um das analoge Positionssignal jedes elektrischen Abgriffes (38) mit einer Referenzspannung zu vergleichen.

10. System nach einem der Ansprüche 1 bis 9, bei welchem entweder der Magnetfeldgenerator oder die Referenzpositionsskala wirkend mit einem Servostellmechanismus verbunden ist.

FIGURE 1

FIGURE 2a

FIGURE 2b

FIGURE 3

FIGURE 4

FIGURE 5